# FASCICULE DE BREVET EUROPEEN

(11) **EP 3 658 395 B1**
(45) Date de publication et mention de la délivrance du brevet: **18.08.2021**
(21) Numéro de dépôt: 18737954.0
(22) Date de dépôt: 18.06.2018
(51) Int. Cl.: B60H 1/24

(54) **DISPOSITIF DE PROTECTION D'EXTRACTEUR D'AIR DE VENTILATION D'UN VEHICULE AUTOMOBILE**
VORRICHTUNG ZUM SCHUTZ EINES BELÜFTUNGSLUFTEXTRAKTORS EINES KRAFTFAHRZEUGS
DEVICE FOR PROTECTING A VENTILATION AIR EXTRACTOR OF A MOTOR VEHICLE

(30) Priorité: 27.07.2017 FR 1757123
(43) Date de publication de la demande: 03.06.2020
(73) Titulaire: PSA Automobiles SA, 78300 Poissy (FR)
(72) Inventeur: MITOUART, Jean Guy, 77310 PRINGY (FR); AMIAUT, Herve, 92500 RUEIL MALMAISON (FR)
(86) Numéro de dépôt international: PCT/FR2018/051454
(87) Numéro de publication internationale: WO 2019/020881

(56) Documents cités:
- JP-U- S6 195 619
- JP-U- S6 334 704

## Description

L'invention a trait au domaine des véhicules automobiles, plus particulièrement au domaine de la carrosserie et de la circulation d'air dans l'habitacle du véhicule.

Un extracteur d'air de ventilation pour véhicule automobile est un dispositif destiné à permettre une circulation et un renouvellement d'air dans l'habitacle, en évacuant à l'arrière du véhicule, vers l'extérieur, un excès d'air créé par le système d'admission d'air frais. Il est généralement monté sur une structure interne du véhicule, au niveau d'au moins un bord latéral du pare-chocs arrière. Il est constitué d'une entrée d'air orientée vers l'intérieur du véhicule, et d'une sortie d'air avec des clapets, donnant sur un espace situé entre son support de montage et une paroi de pare-chocs arrière. Cette disposition l'expose à des risques d'aspersion d'eau, provenant par exemple de la roue arrière située dans son voisinage. Un tel assemblage est également susceptible d'être à l'origine de la remontée de bruits parasites vers l'habitacle.

JP S61 95619 U divulgue un renfort latéral de pare-chocs arrière de véhicule automobile selon le préambule de la revendication 1.

Le document de brevet publié FR 2 975 345 B1 divulgue un dispositif d'étanchéité d'un extracteur d'air, qui consiste en un cadre de protection fixé sur un panneau autour de l'extracteur. Le cadre comprend une paroi périphérique s'étendant perpendiculairement depuis le panneau jusqu'au-delà de l'extracteur. Ce dispositif est intéressant en ce qu'il permet de dévier les éventuels ruissellements d'eau et d'éviter des rentrées d'eau par ruissellement dans la zone de sortie de l'air de l'extracteur. Le document de brevet publié DE 10 2013 111 789 A1 divulgue quant à lui un dispositif de protection, disposé entre la plaque de jupe arrière et le logement de feux arrière. Le dispositif comprend une paroi de protection d'un extracteur d'air, intégrant également des moyens de fixation du pare-chocs.

La protection apportée à l'extracteur d'air par ces dispositifs de l'état de l'art est limitée à une fonction de protection par rapport à des ruissellements d'eau. En outre, leur intégration dans les composants arrière du véhicule introduit des contraintes supplémentaires de dimensionnement et d'assemblage.

L'invention a pour objectif de pallier au moins un des inconvénients de l'état de la technique susmentionné. Plus particulièrement, l'invention a pour objectif de procurer une protection satisfaisante de l'extracteur d'air dans son environnement de fonctionnement, par rapport aux remontées d'eau et/ou de bruit, afin d'assurer la longévité de son utilisation. L'invention a également pour objectif de simplifier l'intégration d'un tel élément de protection dans les composants arrière habituels d'un véhicule automobile.

L'invention a pour objet un renfort latéral de pare-chocs arrière de véhicule automobile, comprenant une face de montage sur une face latérale intérieure du pare-chocs, et des moyens de raidissement s'étendant le long de la face de montage; remarquable en ce que le renfort comprend, en outre, une paroi s'étendant transversalement à la face de montage et décrivant un profil apte à entourer et cloisonner un extracteur d'air ambiant du véhicule, disposé sur la structure dudit véhicule.

Selon un mode avantageux de l'invention, la paroi comprend une portion inférieure horizontale et deux portions latérales généralement verticales aux extrémités de la portion inférieure horizontale, lorsque le renfort est en position de montage sur le véhicule.

Selon un mode avantageux de l'invention, au moins une des deux portions latérales de la paroi comprend une échancrure.

Selon un mode avantageux de l'invention, la paroi comprend, en outre, une portion supérieure avec deux extrémités reliant les deux portions latérales.

Selon un mode avantageux de l'invention, la portion supérieure comprend une échancrure.

L'invention a également pour objet un dispositif de pare-chocs arrière de véhicule automobile, comprenant un pare-chocs arrière et au moins un renfort latéral dudit pare-chocs, remarquable en ce que le ou au moins un des renforts latéraux est conforme à l'invention.

Selon un mode avantageux de l'invention, le pare-chocs et le ou les renforts latéraux dudit dispositif sont réalisés d'une seule pièce.

L'invention a également pour objet un véhicule automobile comprenant un dispositif de pare-chocs arrière, remarquable en ce que ledit dispositif est conforme à l'invention.

Selon un mode avantageux de l'invention, la paroi du renfort latéral s'étend au moins autour d'une face inférieure de l'extracteur d'air disposé sur la structure dudit véhicule.

Selon un mode avantageux de l'invention, la paroi du renfort latéral est à une distance de moins de 5mm de la structure du véhicule sous la face inférieure de l'extracteur d'air. Afin d'amortir les vibrations éventuelles ou neutraliser le jeu mécanique, un matériau élastique peut avantageusement revêtir une portion de la structure du véhicule sous la face inférieure de l'extracteur d'air.

Les mesures de l'invention sont intéressantes en ce qu'une paroi s'étendant transversalement au renfort latéral vers le pare-chocs du véhicule permet de protéger la sortie de l'extracteur d'air des éventuelles projections d'eau provenant de la roue arrière adjacente. La fixation du renfort latéral de pare-chocs à un élément de carrosserie forme une cloison atténuant la remontée vers l'habitacle de bruits parasites provenant de l'extérieur.

La conception et la fabrication d'un pare-chocs ou d'un renfort latéral de pare-chocs selon l'invention requiert un nombre réduit de pièces assurant les fonctions de maintien, d'étanchéité et d'isolation acoustique.

D'autres caractéristiques et avantages de la présente invention seront mieux compris à l'aide de la description et des dessins parmi lesquels :
- La figure 1 est une vue de la face interne d'un renfort latéral de pare-chocs, monté sur un pare-chocs arrière ;
- La figure 2 est une vue d'un renfort latéral de pare-chocs monté sur la carrosserie du véhicule;
- La figure 3 est une vue de la face de montage du renfort latéral de pare-chocs;
- La figure 4 est une vue en coupe du renfort latéral de pare-chocs ;

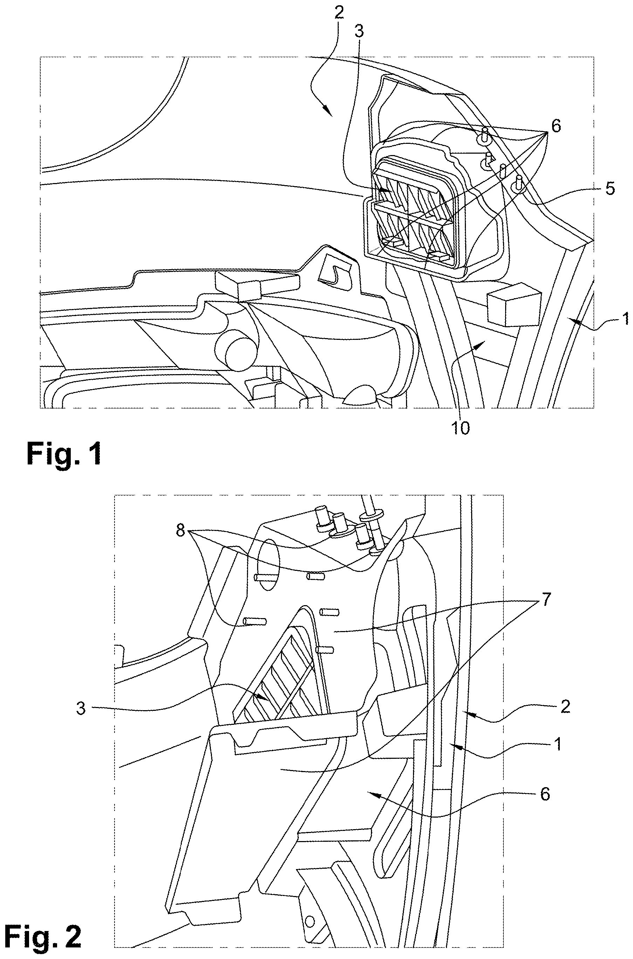

La figure 1 est une vue de la face interne 10 d'un renfort latéral 1 de pare-chocs, monté sur la partie basse d'un pare-chocs arrière 2 par des moyens de fixation 5, au voisinage d'une roue arrière. L'extracteur d'air est monté sur une structure interne du véhicule, non représentée sur la figure. Son entrée d'air est située du côté de la face interne 10 du renfort latéral 1, tandis que sa sortie d'air se situe du côté de la face de montage du renfort latéral sur le pare-chocs arrière. Les conditions de fonctionnement de l'extracteur d'air 3 l'exposent à des risques d'aspersion d'eau provenant de l'extérieur du véhicule automobile, notamment depuis la roue arrière adjacente, et sont également à l'origine de perturbations acoustiques dans l'habitacle pénétrant à travers un tel assemblage.

Le renfort latéral comprend alors une paroi 6, s'étendant perpendiculairement à la face 10 et vers le pare-chocs arrière 2. Cette paroi 6 entoure idéalement l'extracteur d'air selon tout son périmètre. Elle peut être de profondeur variable. La paroi 6 comprend en particulier une portion horizontale inférieure, s'étendant le long de la partie basse de l'extracteur. La sortie de l'extracteur est généralement constituée de volets évacuant l'air par débattement, définissant ainsi une zone de fonctionnement selon leur amplitude maximale d'ouverture. Pour assurer une étanchéité optimale de cette zone fonctionnelle par rapport aux aspersions d'eau, la portion horizontale inférieure recouvre au moins 95% de sa profondeur.

La figure 2 est une vue du renfort latéral 1 de pare-chocs monté sur un élément de tôle 7 sur la carrosserie du véhicule. Un espace contenant l'extracteur 3, dont le pourtour est délimité par la paroi 6, est refermé quasi hermétiquement par l'élément de carrosserie 7, sans pour autant obturer l'entrée 3 de l'extracteur. Des moyens de fixation 8 permettent de fixer le renfort latéral 1 sur l'élément 7. Ce cloisonnement contribue notamment à l'isolation acoustique des compartiments internes du véhicule.

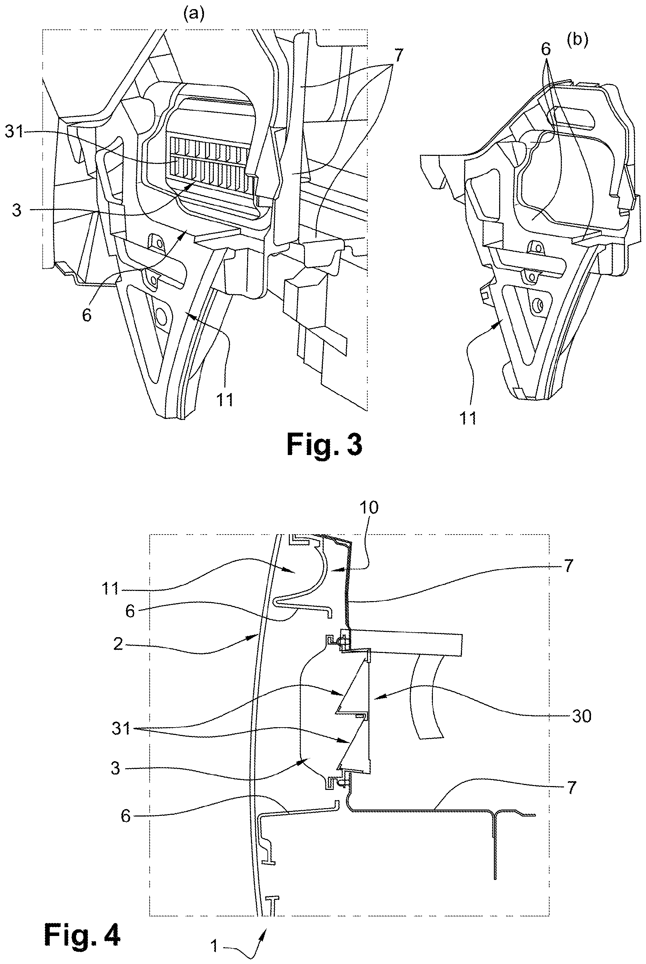

La figure 3 comporte deux vues de la face de montage 11 du renfort latéral 1 sur le pare-chocs arrière. La figure de gauche (a) est une vue en perspective latérale de la face de montage 11, après le montage de l'extracteur d'air 3 sur le renfort latéral 1. Elle montre la paroi 6 située sur la partie supérieure du renfort et qui entoure la sortie de l'extracteur 3. La paroi 6 est de largeur variable, mais ses portions latérale et basse s'étendent au-delà de la sortie de l'extracteur 3, afin de protéger une zone fonctionnelle 31 des éventuelles eaux de ruissellement ou d'aspersion. La vue (a) permet d'entrevoir également l'élément de carrosserie 7 qui est monté sur la face opposée du renfort. La figure de droite (b) est une vue de la face de montage 11 du renfort 1 ; c'est la face en contact avec le pare-chocs arrière 2. Après le montage, la sortie de l'extracteur se retrouve du côté de cette face de montage 11.

La figure 4 est une vue en coupe transversale du renfort latéral 1. Sa face de montage 11 est assemblée contre le pare-chocs arrière 2. La paroi 6 s'étend au-delà de la partie de l'extracteur en saillie par rapport à son support de montage, et notamment au-delà des volets de l'extracteur dont l'espace de débattement définit la zone fonctionnelle 31. La zone d'entrée d'air 30 se trouve du côté de la face 10 ; l'étanchéité et l'isolation acoustique sont assurées par l'élément de carrosserie 7, monté sur les bords de la paroi 6, et qui cloisonne l'extracteur 3 sans obturer la zone d'entrée d'air 30.

## Revendications

1. Renfort latéral (1) de pare-chocs arrière (2) de véhicule automobile, comprenant :
- une face de montage (11) sur une face latérale intérieure du pare-chocs ; et
- des moyens de raidissement s'étendant le long de la face de montage (11) ; **caractérisé en ce que** le renfort comprend, en outre :
- une paroi (6) s'étendant transversalement à la face de montage (11) et décrivant un profil apte à entourer et cloisonner un extracteur (3) d'air ambiant du véhicule, disposé sur la structure dudit véhicule, la paroi (6) comprenant une portion inférieure horizontale et deux portions latérales généralement verticales aux extrémités de la portion inférieure horizontale, lorsque le renfort est en position de montage sur le véhicule

2. Renfort latéral (1) de pare-chocs (2) selon la revendication 1, **caractérisé en ce qu'**au moins une des deux portions latérales de la paroi (6) comprend une échancrure.

3. Renfort latéral (1) de pare-chocs (2) selon l'une des revendications 1 et 2, **caractérisé en ce que** la paroi (6) comprend, en outre, une portion supérieure avec deux extrémités reliant les deux portions latérales.

4. Renfort latéral (1) de pare-chocs (2) selon la revendication 3, **caractérisé en ce que** la portion supérieure comprend une échancrure.

5. Dispositif de pare-chocs arrière de véhicule automobile, comprenant un pare-chocs arrière (2) et au moins un renfort latéral (1) dudit pare-chocs, **caractérisé en ce que** le ou au moins un des renforts latéraux est conforme à l'une des revendications 1 à 4.

6. Dispositif de pare-chocs arrière selon la revendication 5, **caractérisé en ce que** le pare-chocs et le ou les renforts latéraux sont réalisés d'une seule pièce.

7. Véhicule automobile comprenant un dispositif de pare-chocs arrière, **caractérisé en ce que** ledit dispositif est conforme à l'une des revendications 5 et 6.

8. Véhicule automobile selon la revendication 7, **caractérisé en ce que** la paroi (6) du renfort latéral (1) s'étend au moins autour d'une face inférieure de l'extracteur d'air (3) disposé sur la structure dudit véhicule.

9. Véhicule automobile selon la revendication 8, **caractérisé en ce que** la paroi (6) du renfort latéral (1) est à une distance de moins de 5mm de la structure du véhicule sous la face inférieure de l'extracteur d'air.

## Patentansprüche

1. Seitliche Verstärkung (1) einer hinteren Stoßstange (2) eines Kraftfahrzeugs, mit
- eine Montagefläche (11) auf einer inneren Seitenfläche der Stoßstange; und
- Versteifungsmittel, die sich entlang der Montagefläche (11) erstrecken;
Die Verstärkung umfasst ferner:
- eine sich quer zur Montagefläche (11) erstreckende Wand (6), die ein Profil beschreibt, das geeignet ist, einen an der Fahrzeugstruktur angeordneten Außenluftextraktor (3) des Fahrzeugs zu umgeben und zu unterteilen, wobei die Wand (6) einen horizontalen unteren Abschnitt und zwei im Allgemeinen vertikale Seitenabschnitte an den Enden des horizontalen unteren Abschnitts aufweist, wenn sich die Verstärkung in der Einbaulage befindet.

2. Seitliche Verstärkung (1) für Stoßfänger (2) nach Anspruch 1, **dadurch gekennzeichnet, dass** mindestens einer der beiden Seitenteile der Wand (6) einen Ausschnitt aufweist.

3. Seitenverstärkung (1) für Stoßfänger (2) nach einem der Ansprüche 1 und 2, **dadurch gekennzeichnet, dass** die Wand (6) ferner einen oberen Abschnitt mit zwei Enden aufweist, die die beiden Seitenteile verbinden.

4. Seitliche Verstärkung (1) für Stoßfänger (2) nach Anspruch 3, **dadurch gekennzeichnet, dass** der obere Abschnitt eine Aussparung umfasst.

5. Kraftfahrzeug-Heckstoßfängervorrichtung mit einem hinteren Stoßfänger (2) und mindestens einer seitlichen Verstärkung (1) des Stoßfängers, **dadurch gekennzeichnet, dass** die oder mindestens eine der seitlichen Verstärkungen einem der Ansprüche 1 bis 4 entspricht.

6. Heckstoßfängeranordnung nach Anspruch 5, **dadurch gekennzeichnet, dass** der Stoßfänger und die seitliche(n) Verstärkung(en) einstückig ausgebildet sind.

7. Kraftfahrzeug mit einer hinteren Stoßfängervorrichtung, **dadurch gekennzeichnet, dass** die Vorrichtung einem der Ansprüche 5 und 6 entspricht.

8. Kraftfahrzeug nach Anspruch 7, **dadurch gekennzeichnet, dass** die Wand (6) der seitlichen Verstärkung (1) sich mindestens um eine Unterseite des Luftabsaugers (3) erstreckt, die an der Struktur des Fahrzeugs angeordnet ist.

9. Kraftfahrzeug nach Anspruch 8, **dadurch gekennzeichnet, dass** die Wand (6) der seitlichen Verstärkung (1) in einem Abstand von weniger als 5 mm von der Fahrzeugstruktur unter der Unterseite des Luftabzugs liegt.

## Claims

1. Side reinforcement (1) of rear bumper (2) of motor vehicle, including:
- a mounting face (11) on an inner side face of the bumper; and
- stiffening means extending along the mounting face (11);
**characterized in that** the reinforcement includes, in addition:
- a wall (6) extending horizontally to the mounting face (11) and describing a profile capable of enclosing and partitioning an extractor (3) of ambient air of the vehicle, arranged on the structure of the vehicle, the wall (6) comprising a horizontal lower portion and two lateral portions generally vertical at the ends of the horizontal lower portion, when the reinforcement is in the mounting position on the vehicle.

2. Side reinforcement (1) of bumper (2) according to claim 1, characterized that at least one of the two side portions of the wall (6) includes a cross-section.

3. Side reinforcement (1) of bumper (2) according to one of claims 1 and 2, **characterized by** the fact that the wall (6) also includes a top portion with two ends connecting the two side portions.

4. Side reinforcement (1) of bumper (2) according to claim 3, characterized as the top portion includes a cross-section.

5. Rear bumper device of a motor vehicle, including a rear bumper (2) and at least one side reinforcement (1) of the said bumper, characterized that one or more of the side reinforcements complies with one of the claims 1 to 4.

6. Rear bumper device according to claim 5, characterized as the bumper and the side reinforcement(s) are made of one piece.

7. Motor vehicle comprising a rear bumper device, characterized as it conforms to one of claims 5 and 6.

8. Motor vehicle according to claim 7, characterized as the wall (6) of the side reinforcement (1) extends at least around a lower face of the air extractor (3) placed on the structure of the vehicle.

9. Motor vehicle according to Claim 8, characterized as the wall (6) of the side reinforcement (1) is less than 5mm from the vehicle structure under the lower face of the air extractor.
